Europäisches Patentamt

**European Patent Office**

**Office européen des brevets**

(11) Publication number: **0 014 926**
**A1**

## (12) EUROPEAN PATENT APPLICATION

(21) Application number: **80100665.1**

(22) Date of filing: **11.02.80**

(51) Int. Cl.³: **G 06 F 15/16**
**H 04 L 11/16**

(30) Priority: **15.02.79 IT 6732379**

(43) Date of publication of application:
**03.09.80 Bulletin 80/18**

(84) Designated Contracting States:
**DE FR GB NL**

(71) Applicant: **CSELT Centro Studi e Laboratori Telecomunicazioni S.p.A.**
**Via Guglielmo Reiss Romoli, 274**
**I-10148 Turin(IT)**

(72) Inventor: **Giradi, Gerardo**
**V. Maestra, 27**
**S. Raffaele Cimena Torino(IT)**

(74) Representative: **Riederer Freiherr von Paar zu Schönau, Anton et al,**
**Müllerstrasse 31**
**D-8000 München 5(DE)**

(54) **Interprocessor connection system.**

(57) The invention concerns an interprocessor connection system for data and information exchange, the interconnection being achieved by means of a sequential multiple-access ring memory duely timed by a clock signal to which ring memory all the processors are connected through the same number of interfaces, said interfaces being equipped with devices for sequential storage which devices are essential parts of said sequential ring memory.

Fig 1

EP 0 014 926 A1

*Patentanwalt*

*Dipl.-Ing. Anton Freiherr* Riederer von Paar

Frhr. Riederer v. Paar, Müllerstr. 31, D-8000 München 5

Müllerstraße 31
D-8000 München 5

☎ München (089) 26 60 60

Telex 523 903 claim d
+ claims München

Konten:
Bayerische Vereinsbank München 563 390 (BLZ 700 202 70)
Gemeindesparkasse Gauting 624 072 (BLZ 700 560 90)
Postscheckkonto München 1921 39-804 (BLZ 700 100 80)

Datum

U014926

CSELT
Centro Studi e Laboratori Telecomunicazioni S.p.A.
Via Guglielmo Reiss Romoli, 274
I-10148 Turin, Italy

## Interprocessor Connection System

The present invention relates to processor networks and more particularly it refers to an inter-processor connection system using a sequential multiple-access ring memory.

So-called multi-processing systems are known in the art; they basically consist of the interconnection system of a plurality of processors interexchanging data and messages and accessing com - mon resources in the simultaneous execution of different portions of an overall task.

A problem presented by said multi-processing systems relies in the realization of the means used by the processors to interexchange information; the inefficiency of such means can deteriorate the inherent efficiency of even much sophisticated multiprocessing systems.

Generally in the processor-to-processor interaction the use of a physical structure, common to more processors, must be provided that is devoted to that specific exchange as long as it lasts, and that cannot be accessed by the other processors of the system.

In this case the means either consists of a "bus" or of a "memory" controlled by a control device acting as an "arbiter" of the system so that it can prevent and resolve the access conflicts to the means by the processors.

The inherent disadvantages of a means of this kind are as follows :

- non-availability of the connecting means for the other processors while an interaction is in progress between two of them, with conquent waiting queues of all the remaining processors and resulting considerable decrease in the overall speed of the system;

- increased circuit and program complexity for the queue control ;

- limited number of processors that can make part of the system, due to intrinsic limitations involved in the use of the "arbiter".

These and further problems are solved by the present inter-processor connection system that, utilizing as means a sequential multiple- access ring memory:

- is always available for all the processors;

- is designed to adapt itself in real time to different traffic conditions by varying its memory power;

- it drastically reduces the waiting queues and thus it allows an increase in the overall speed of the system;

- it allows without any additional modifications the recovery in sub - sequent times of a message that could not be served at a certain instant;

- it does not entail limitations in the number of processors of the system, as it needs no "arbiter" to solve problems concerning access conflicts to the common means;

- it allows dislocation of one or more processors of the system in ) places that are physically distant from the remaining system;

- it has a particular simple architecture and then it is reliable and cheap.

It is particular object of the present invention an inter-processor connection system for data and information exchange, wherein such interconnection is achieved by means of a sequential multiple-access ring me mory, duly timed by a clock signal to wich all the processors are connected through the same number of interfaces, said interfaces being equipped with devices for sequential storage, that are essential part of said sequential ring memory.

These and further characteristics of the present invention will become clearer from the following description of a particular way of embodiment thereof given by way of example and not in a limiting sense taken in connection with the annexed drawings in wich:

- Fig. 1 is a general scheme showing multiprocessor interconnec - tion by means of a sequential multiple-access ring memory;

- Fig. 2 is a schematic representation of a first example of inter - face, according to the invention, using two shift registers that can have different capacity;

- Fig. 3 is a schematic representation of a second example of interface, according to the invention, using two read-and-write memories.

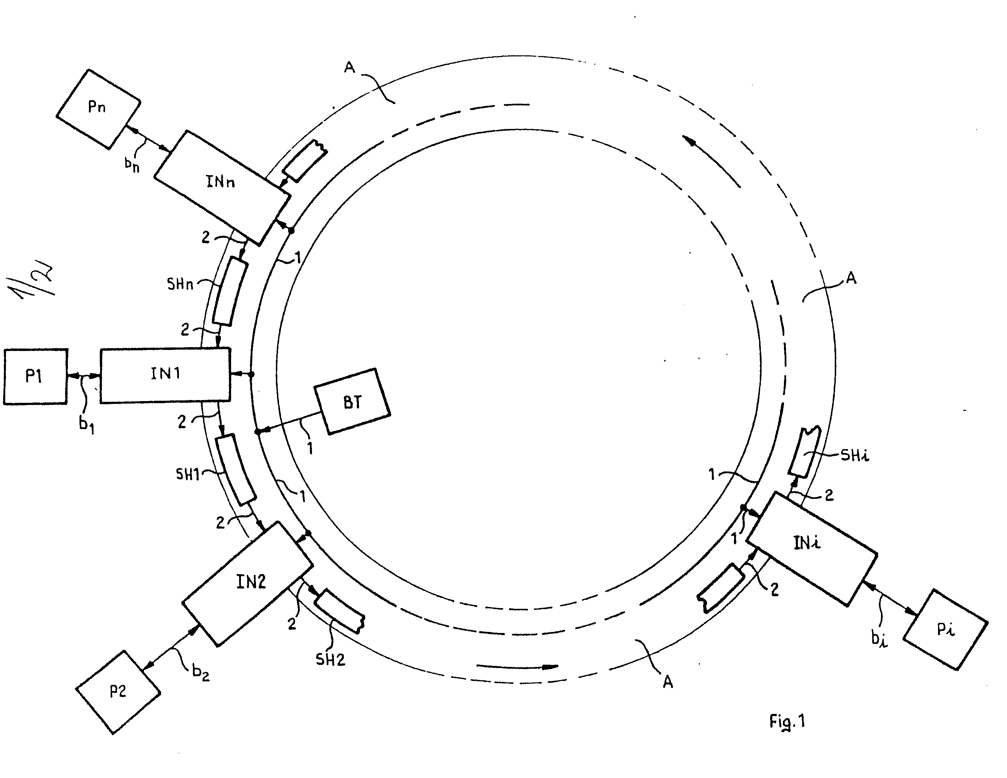

In Fig. 1 references $P1, P2, Pi, Pn$ denote the n proces - sors of the system that can be of any known type; references IN 1, IN 2, IN i, IN n denote n interfaces bidirectionally connected, through buses $b_1, b_2, b_i, b_n$ to said n processors P and inserted in a sequential multiple access ring memory, denoted by A.

In the particular example described, memory A consists of :

- n usual shift registers, $SH1, SH2, SHi, SHn$ inserted via connection

- 4 -

2 of m wires between two adjacent interfaces (IN);

- n shift registers, or circuits with equivalent function, making part of each interface, that will be examined in details in connection with drawings 2 and 3;

- a wire 1, common to the whole ring A, in which there is a clock signal CK generated by a conventional time-base, denoted by BT.

Said shift registers, those pertaining to the interfaces included, can be of whatever length, even null, and have a degree of parallelism suitable to the quantity m of data D that are to be transferred simultaneously at each pulse of the clock signal CK. The artitecture and the operation of interfaces 1N, that are the object of the present invention, will be described in details hereinafter.

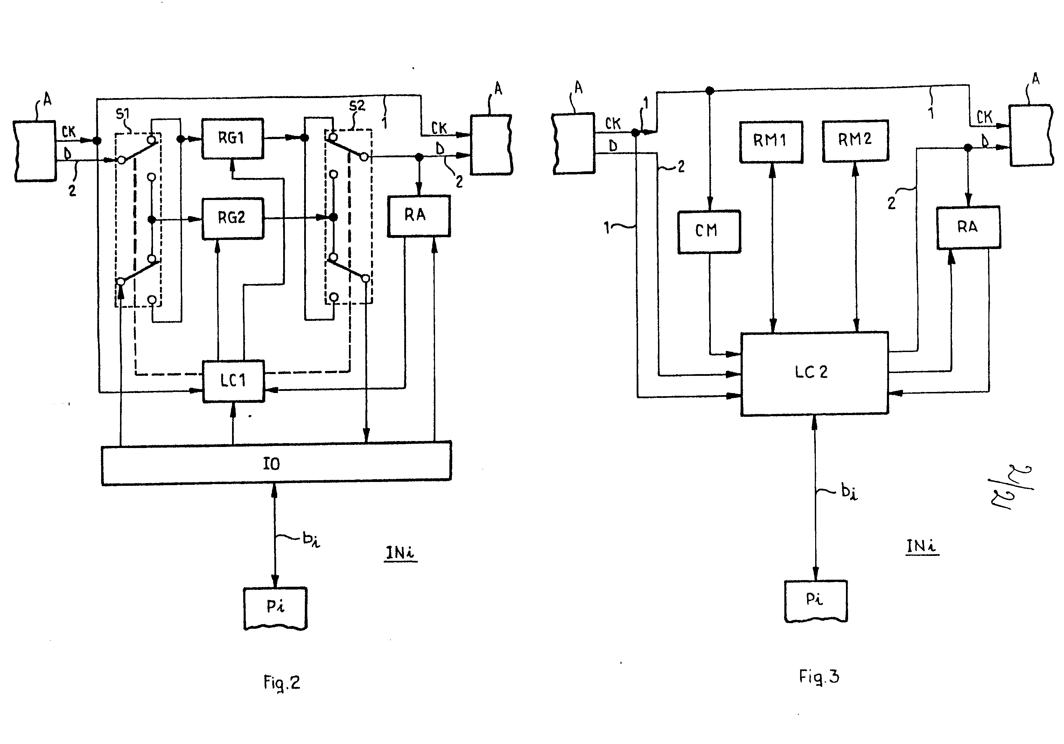

In Fig. 2 reference A denotes the same sequential ring memory represented in Fig. 1; more particularly there are derived from A (Fig. 2) wire 1, on wich clock signal CK is present, and m wires relating to data circulation D; reference $b_i$ denotes the bus interconnecting generic interface INi and the corresponding processor Pi.

Reference IO denotes a usual input-output circuit, generally consisting of logic gates, connected on the one side to bus $b_i$ and on the other side to the remaining blocks of interface INi.

References RG1, RG2 denote two ordinary shift registers that can have any length and also different length from each other; references S1, S2 denote two ordinary two-path two-position multiplexers; reference LC1 denotes a logic circuit apt to receive information from IO and A and to control the positioning of multiplexers S1, S2 and the writing and reading operations in registers RG1, RG2.

LC1 receives the enabling signal to effectuate the exchange in multiplexers S1, S2 from an operating area recognizer, denote by RA, that emits said enabing signal when it recognizes suitable labels, passing on ring A, by the comparison between analogous words it receives from IO.

The functions of logic circuit LC1, and consequently those of wole interface INi will be examined hereinafter.

If multiplexers S1, S2 are positioned in the same way as in the drawing, register RG1 is inserted in to ring A while register RG2 is available for interface INi.

Under these conditions, LC1, according to the instructions it receives via IO from Pi, just transfers to RG1 the clock signal CK it receives from ring A via wire 1, and times RG2 with its internal time so as to allow the loading of the data coming from IO and/or the unload of the same towards IO.

Once these operations are over processor Pi is able to control the exchange between registers RG1 and RG2, via multiplexers S1 and S2, operating as follows :

Pi sends LC1, through IO, a suitable signal enabling the exchange that becomes operative when the correspondence occurs with the enabling generated by RA.

The exchange between RC1 and RG2 occurs in a synchronous way with respect to clock signal CK present on wire 1, so that it does not interfere with the usual data flow D passing on connection 2 and then on A.

Obviously if the length of RG1 and RG2 are both non null the exchange allows simultaneous storage of new data into the ring memory and data retrieval from the same memory, and particularly if RG1 and RG2 are different in length, at each switching operation there is an instantaneous variation of the overall power of ring A.

When only one between the lengths of RG1 and RG2 is null there is at each exchange either just data storage in A or just the retrieval. Obviously the case in wich both registers RG1 have null lenghth is meaningless.

In Fig. 3 references A, RA, b., Pi, D, CK, 1, 2 denote the same devices as in Fig. 2; reference LC2 denotes a logic circuit that to the already examined functions adds also the functions of IO, S1 and S2.

References RM1 and RM2 are two read-and-write memories of any known kind, bidirectionally connected to circuit LC2.

Reference CM denotes a time-base device of any known type, timed by clock signal CK extracted from wire 1 and able to generate and send towards LC2 all the addresses necessary to scan in reading and writing RM1 and RM2.

The cooperation between RM1 and CM or RM2 and CM allows the embodiment of a circuit operating in the same way as a shift register like RG1 or RG2.

The operation of the circuit represented in Fig. 3 is then as follows : CM and RM1 cooperate in order to perform as a shift register (analogous to RG1) inserted in ring A; at the same time RM2 is taken by Pi, through LC2, as a portion of its operative memory.

Afterwards, once the switching has taken place between RM1 and RM2 upon the coicidence of the enabling signals emitted by Pi and by Ra, as already examined for Fig. 2, CM and RM2 happen to cooperate in order to perform as shift registers inserted in ring A (analogous to RG2), while RM1 is taken by Pi, through LC2, as making part of its operative memory.

The operation of the circuit of Fig. 3 is then basically analogous to the one of Fig. 2 and is advantageous in that the processor PI can more easily access, as is clear to the skilled in the art, the memories designed to handle tha data.

The above considerations, made on the lengths of RG1 and RG2 in Fig. 2 obviously apply, with the same consequences to the capacity of memories RM1 and RM2.

In the examples of embodiment described above, the identification of the information blocks circulating in A was assigned to suitable labels coming immediately before each block; so each interface IN must be equipped with a recognizing device RA for such labels.

However a device can be provided that is centralised with respect to the ring, designed to signal, by means of suitable direct connections, to the different interfaces the identification of the information blocks circulating in A.

At this point there are two alternatives either the centralized device is apt to signal to the various interfaces what information block interests them, or the processors corresponding to the various interfaces decide whether a given block can or cannot interest them.

Therefore, interfaces IN of the systems in which said centralized signalling device is provided, need not the block denoted by RA in Figures 2 and 3, but it will be enough if signalling information of the centralized device arrive at the logic circuits denoted by LC1, LC2.

An obvious extension of the system just described resides in the possibility of dislocating one or a plurality of interfaces IN into places at a great distance from the remaining system without altering or diminishing tha characteristics of the just described architecture.

To attain this goal, it will be sufficient for instance to connect the remote interfaces to the remaining portion of the ring by means of a usual synchronous bidirectional transmission line. In the described examples the frequency of the clock signal CK generated on wire 1 (Figures 2, 3) by time-base BT does not depend upon the interfaces IN, that consequenly must time their operation with such a signal.

Without going out of the scope of the invention said interface may be provided to be able to slow down the clock signal in function of its operating requirements.

To achieve this goal the addition of a further wire to ring A is enough, that analogously to wire 1, is common to all the interfaces IN and BT. In this way each interface IN can send a possible signal inhibiting the generation of signal CK to BT.

Such technique obviously allows interfaces IN to be simplified at the expense of a slow down of the data transfer flow along ring A; said slowing occurring however only while the exchanges between interfaces IN and ring A is in progress.

More particularly the interfaces need no longer effectuate the exchange with the ring of whole memory elements, but can read and/or write data on ring A through an operation known as "hand - shake" that basically consists in enabling the data transfer along ring A when all the interferences are ready to effectuate a new op - eration.

Such enabling signal appears on said additional wire common to the whole ring A and becomes operative only when all the interfaces are ready.

It is obvious that what described has been given only by way of example and that variations and modifications are possible without going out of the scope of the present invention.

PATENT CLAIMS

1. Inter processor-connection system for data and information exchange, characterized in that said interconnection is achieved by means of a sequential multiple-access ring memory(A),duly timed by a clock signal (CK) to which all the processors (P) are connected through the same number of interfaces (IN), said interfaces being equipped with devices for sequential storage, that are essential part of said sequential ring memory (A).

2. Interprocessor connection system according to claim 1, characterized in that said interfaces (IN) basically consist of:

- a first (RG1) and a second (RG2) shift register, designed to be alternatively inserted the first into the ring memory (A) and the second as external memory of the processor (P) and viceversa;

- a pair of two-path and two-position multiplexers (S1, S2) able to physically make said alternate insertion of said first (RG1) and second (RG2) register;

- a first logic circuit (LC1) able to control said pair of multiplexers (S1, S2) and drive the reading and writing operations in said shift registers (SR1, SR2);

- an input and output circuit (IO) towards the processor (P);

- a recognizer of the operating area (RA) able to recognize suitable labels present on said ring memory (A) and emit an enabling signal towards said first logic circuit (LC1)

3. Interprocessor connection system according to claim 1, characterized in that said interfaces (IN) basically consist of :

- a first (RM1) and a second (RM2) reading and writing memory, able to be alternatively inserted the first into the ring memory (A) and the second as external memory of the processor (P) and vice - versa;

- a time-base (CM)able to generate in sequence all the reading and writing addresses for said reading and writing memories (RM1,RM2);

- a second logic circuit (LC2) able to control said alternate insertion of said first and second read-and-write memory (RM1,RM2) into the ring memory (A) and as external memory of the processor (P);

- a recognizer of operating area (RA) able to recognize suitable labels present on said ring memory (A) and emit an enabling signal towards said second logic circuit (LC2).

4. Interprocessor connection system according to claim 2, characteristic in that said first logic circuit (LC1)transfers the clock signal (CK) it receives from said ring memory (A) to the one of said two registers (RG1,RG2) that is inserted in said ring memory (A) and times according to its internal time (RG2 or RG1).

5. Interprocessor connection system according to claims 2 and 4, characterized in that said first logic circuit (LC1) controls the exchange in said pair of multiplexers (S1,S2) upon receiving said enabling signal from said operating area recognizer (RA) and after receiving the signal permitting the exchange from said processor (P) through said input-and-output circuit (IO).

6. Interprocessor connection system according to claims 2 and 3, characterized in that said time base (CM) and said reading and writing memories (RM1,RM2) cooperate with said second logic circuit (LC2) in order to operate in the same way as said two shift registers (RG1,RG2), controlled by said first logic circuit (LC1).

7. Interprocessor connecting system according to claim 3, characterized in that said second logic circuit(LC2) controls the exchange between said two reading and writing memories (RM1,RM2) upon receiving said enabling signal from said operating area recognizer (RA) and after receiving a signal enabling the exchange coming directly from said processor (P).

8. Interprocessor connection system according to claims 1,2,3, 5, 7, characterized in that said operating area recognizer (RA) , present in eachone of said interfaces (IN), is replaced by a single signalling device (IN), centralized with respect to said ring memory (A) and able to send to all the logic circuits (LC1, LC2) of all the interfaces (IN) the information apt to identify the data block present on said ring memory (A).

9. Interprocessor connection system according to the previous claims, characterized in that any of said interfaces (IN) is connected to said ring memory (A) by any known connection, provided it is synchronous and bidirectional.

10. Interprocessor connection system according to the previous claims, characterized in that each of said interfaces (IN) is able to prevent the generation of said clock signal (CK) for all time necessary to carry out the exchange of a datum between said interface (IN) and said ring memory (A).

11. Interprocessor connection system the whole as described in the text and depicted in the annexed drawings.

Fig. 1

Fig.3

Fig.2

**European Patent Office**

## EUROPEAN SEARCH REPORT

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| | IEEE PROCEEDINGS OF THE ANNUAL SYMPOSIUM ON COMPUTER ARCHITECTURE vol. 3, 19-21th January 1976, pages 124-129 New York, U.S.A. REAMES et al.: "Design and simulation of the distributed loop computer network (DLCN)" <br><br> * Page 124, column 1, lines 24-61; column 2, lines 1,2; figures 1,2; page 125, column 1; figures 3,4 on page 126; page 129, column 1, lines 24-29 * <br><br> -- | 1,2 | G 06 F 15/16 <br> H 04 L 11/16 |
| | FR - A - 2 315 725 (R.T.C.) <br><br> * Page 2, lines 30-34; page 3, lines 23-27 * <br><br> -- | 1 | **TECHNICAL FIELDS SEARCHED (Int.Cl. 3)** <br><br> G 06 F 15/16 <br> H 04 L 11/16 <br> G 06 F 3/04 |
| | US - A - 4 071 706 (RCA) <br><br> * Column 1, lines 4-11, 61-67; column 2, lines 7-34; 51-53; figures 1,2 * <br><br> -- | 1,2,4, 5 | |
| E | EP - A - 0 009 824 (CSELT) <br><br> * Page 2, lines 10-14, 31-33; page 3, lines 1-6, 11-13, 20-32; page 4, lines 1,2, 11-26; figures 1,2 * <br><br> ---- | 1,2 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-05-1980 | DHEERE |

EPO Form 1503.1  06.78